# EUROPEAN PATENT APPLICATION

(11) **EP 1 958 823 A1**
(43) Date of publication of application: **20.08.2008**
(21) Application number: 07013253.5
(22) Date of filing: 06.07.2007
(51) Int. Cl.: B60R 11/02

(54) **Rotable displaying device and method for setting rotating angle thereof**

(30) Priority: 15.02.2007 CN 200710005178
(71) Applicant: Delta Electronics, Inc., Shanding Village, Gueshan Township Taoyuan County 333 (TW)
(72) Inventor: Lin, I-Shen, Taoyuan 333 (TW); Huang, Chin-Chu, Taoyuan 333 (TW)
(74) Representative: Sawodny, Michael-Wolfgang

(57) **Abstract**

A rotatable displaying device (4) is provided. The rotatable displaying device (4) includes a body (42), a fixing element (51) assembled to the body (42), a movable element (50) detachably assembled with the fixing element (51), and a displaying component (40) pivotally mounted on the body (42) and detachably assembled with the movable element (50) via a retaining element (52).

## Description

The present invention relates to a displaying device and the relevant operating method of the displaying device, and more particular to a rotatable displaying device and the method for setting a rotating angle of the rotatable displaying device.

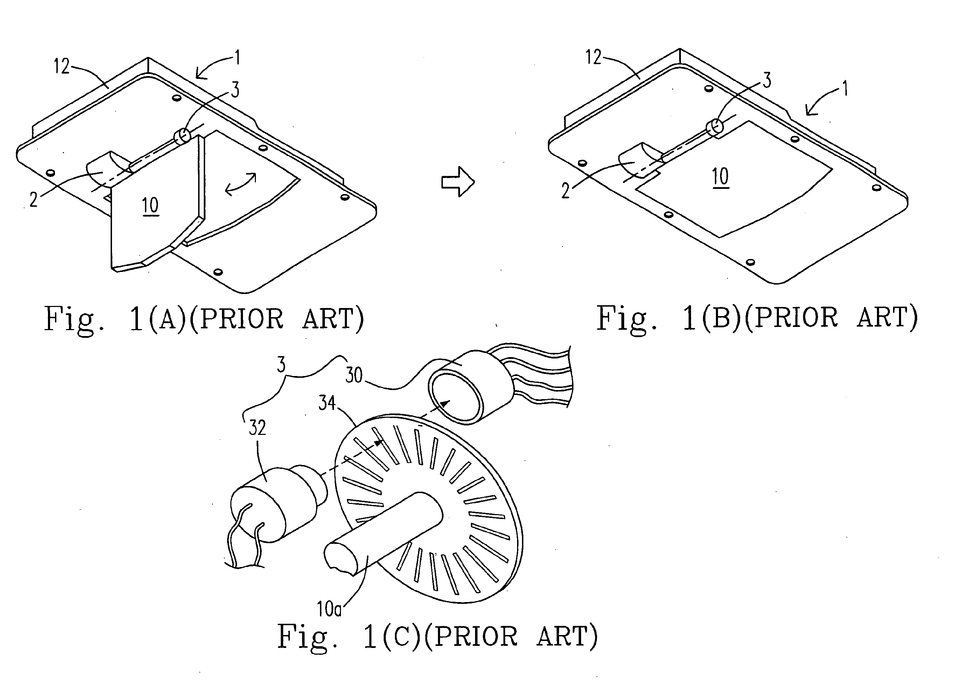

The rotating operation of the conventional displaying device is usually performed by an auto-controlling manner. During the rotating process, a motor is used to control the rotating angle of the displaying device, i.e. the motor controls the stop position of the displaying device. In addition, the motor is also used to start the operation of the displaying device from its last stop position. Such a displaying device is common for vehicles. Please refer to Figs. 1 (A) and 1(B), wherein Fig. 1(A) shows a rotatable displaying device in the prior art, and Fig 1(B) shows the appearance of the rotatable displaying device while the screen is at its start position. Please refer to Fig. 1(A), the rotatable displaying device 1 includes a screen 10, a body 12 pivotally jointed with the screen 10 via the pivot 10a, a power system 2, and a retaining device 3. The power system 2, in usual, includes a motor and at least a gear wheel (not shown herein). Please refer to Fig. 1(C), which is the drawing showing the retaining device in Fig. 1(A). As shown in Fig. 1(C), the retaining device 3 includes an optical grating 34, a light source 32 and a light sensor 30. The optical grating 34 is coaxially mounted on the pivot 10a and rotates there along. Accordingly, when the pivot 10a rotates for a specific rotating angle, the optical grating 34 would rotate for the same specific rotating angle and perform an operation to the light path generated by the light source 32. Then, the light sensor 30 would obtain the specific rotating angle of the pivot 10a by the change of the light path.

When there is no viewing angle is predetermined, i.e. the screen 10 is not set to a specific operation position, the screen 10 is always located at its start position. During the usage of the rotatable displaying device 1, the power system 2 starts firstly to put down the screen 10. When the rotating angle of the screen 10 arrives to a specific viewing angle of the user, the power system 2 would stop the rotating of the screen 10. No matter the user would like to finely adjust the viewing angle manually or by the power system 2 later. When the final viewing angle is determined, the information of the rotating angle would be electronically recorded as a predetermined viewing angle via the rotating angle of the optical grating 34 and the light sensor 30. After that, the screen 10 could rotate to the predetermined viewing angle for the usage of the user by the light sensor 30, the power system 2 and the optical grating 34 when the user would like use the rotatable displaying device 1 next time. Furthermore, when the screen 10 rotates to the predetermined viewing angle the power system 2 would be turned off.

It seems that the mentioned operation manner is very convenient, but it also increases the structure complexity of the rotatable displaying device by adding the additional power system 2 and the retaining device 3. Furthermore, the electricity and control cost are also increased by adding the mentioned system and device. In addition, since the structure complexity of the rotatable displaying device is increased, the relevant breakdown possibility and total cost are also increased.

For most the consumers, i.e. the potential users of the rotatable displaying device, the most expected application fields would be the vehicles. Since a rotatable displaying device is usually not a standard equipment for the common vehicles, it is necessary to additionally install a rotatable displaying device as shown in Fig. 1. Nevertheless, since such an additional rotatable displaying device has a complex power system and would consume some electricity power of the vehicle, the electricity distribution and electricity configuration management of the vehicle are always affected. In addition to the power system of the rotatable displaying device, the operations of the screen and the retaining device are also electricity-consuming. Therefore, the electricity distribution and the electricity configuration management of the vehicle are always become worse.

As above-mentioned, for a rotatable displaying device, a new design structure and the simpler way to easily set up the operation status of the displaying device for matching the various viewing angles of the users are desires. An object of the present application is to provide a method and a rotation structure to make the displaying device more simple and less electricity-consuming so as to increase the reliability and applications of the rotatable displaying device.

In accordance with an aspect of the present invention, a rotatable displaying device is provided. The rotatable displaying device includes a body, a fixing element assembled to the body, a movable element detachably assembled with the fixing element, and a displaying component pivotally mounted on the body and detachably assembled with the movable element via a retaining element.

Preferably, the movable element and the retaining element move together.

Preferably, one of the movable element and the retaining element has a protrusion and the other one has a slot.

Preferably, the rotatable displaying device further includes an elastic component mounted between the displaying component and the retaining element.

Preferably, the movable element has a first uneven surface, and the fixing element has a second uneven surface detachably connected to the first uneven surface.

Preferably, the movable element and the displaying component move together when the first uneven surface is separate from the second uneven surface and the retaining element is connected with the movable element.

Preferably, the displaying component is a screen.

In accordance with another respect of the present application, a method for obtaining an operating angle of a displaying device having a displaying component, a retaining element and a retaining device is provided. The method includes steps of: (1) assembling the displaying component with the retaining element, (2) combining the retaining device to the retaining element, (3) rotating the displaying component from a start position to a specific position and (4) fixing the retaining device.

Preferably, the retaining device rotates with the displaying component via the retaining element.

Preferably, the method further has a step of removing the retaining element from the retaining device after the step of (4).

Preferably, the operating angle is a rotating angle from the start position to the specific position.

In accordance with a further respect of the present application, a rotatable displaying device is provided. The rotatable displaying device includes a body, a retaining device mounted on the body, and a displaying component pivotally mounted on the body and detachably assembled with the retaining device via a retaining element and a pulling element.

Preferably, the retaining device includes a movable element detachably assembled to the retaining element.

Preferably, the movable element and the retaining element move together when they are assembled to each other.

Preferably, the retaining device further comprises a fixing element.

Preferably, the displaying component is a screen.

The above contents and advantages of the present invention will become more readily apparent to those ordinarily skilled in the art after reviewing the following detailed descriptions and accompanying drawings, in which:

Fig. 1(A) shows a drawing of the rotatable displaying device in the prior art;

Fig 1(B) is the appearance of the rotatable displaying device while the screen is at its start position;

Fig. 1(C) is the drawing showing the retaining device in Fig. 1(A);

Fig.2 is a drawing showing an appearance of the rotatable displaying device according to a preferred embodiment of the present application;

Fig. 3 is a drawing showing the operating appearance of the rotatable displaying device as shown in Fig. 2;

Figs. 4(A) - 4(D) show the operating steps performed by the retaining device and the retaining element of the rotatable displaying device according to a preferred embodiment of the present application; and

Fig. 5 shows the sectional drawing of the retaining device of the rotatable displaying device shown in Fig. 4(A).

The present invention will now be described more specifically with reference to the following embodiments. It is to be noted that the following descriptions of preferred embodiments of this invention are presented herein for purpose of illustration and description only; it is not intended to be exhaustive or to be limited to the precise form disclosed.

In order to overcome the drawbacks resulting from the retaining device of the rotatable displaying device in the prior art, the present application provides another retaining device to perform the viewing angle operations of the rotatable displaying device.

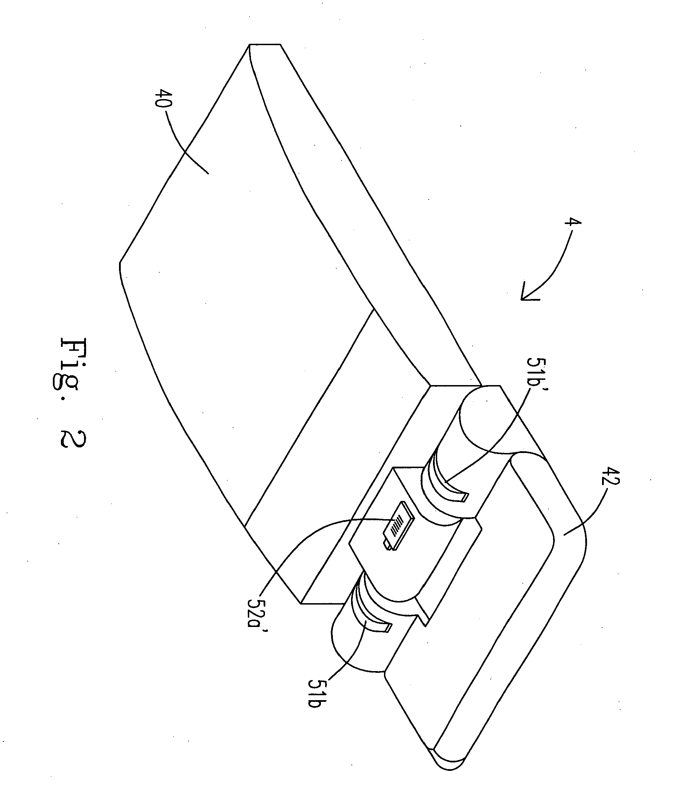

Please refer to Fig.2, which is a drawing showing an appearance of the rotatable displaying device according to a preferred embodiment of the present application. As shown in Fig. 2, the rotatable displaying device 4 includes a display 40 and a body 42 pivotally connected to the display 40.

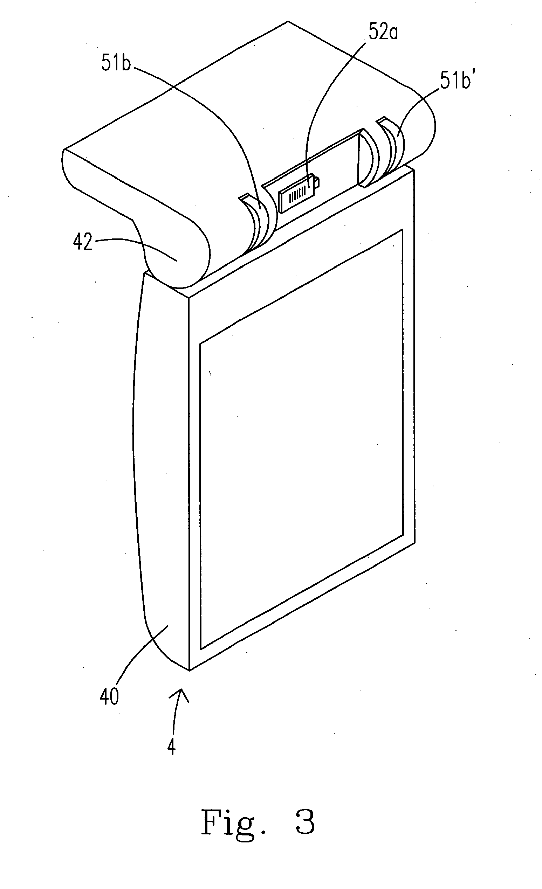

Please refer to Fig. 3, which is a drawing showing the operating appearance of the rotatable displaying device as shown in Fig. 2. As shown in Figs. 2 and 3, the third pulling component 51b' exposes from the body 42, the fourth pulling component 52a' exposes from the display 40, the first pulling component 51b exposes from the body 42, and the second pulling component 42a exposes from the display 40 under different operating statue of the rotatable displaying device 4. Nevertheless, when the rotatable displaying device 4 is installed to a vehicle (not shown), the different operating positions of the display 40 might be dependent on the various demands.

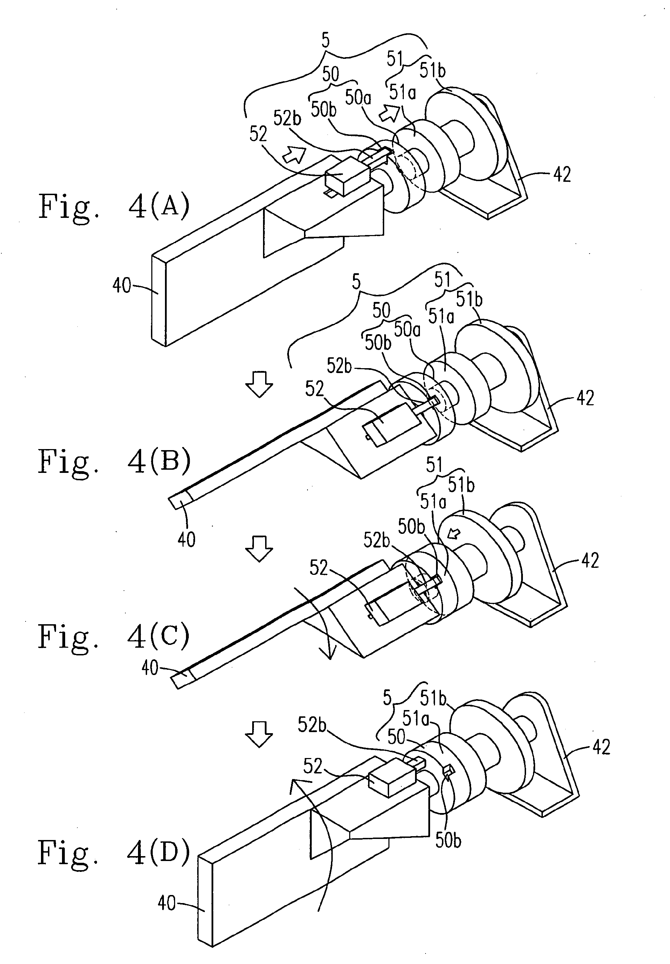

Please refer to Figs. 4(A) - 4(D), which show the operating steps performed by the retaining device and the retaining element of the rotatable displaying device according to a preferred embodiment of the present application. Since it is an object of the present application to make the display 40 operating at a proper position, i.e. the display 40 could have a proper viewing angle for the user, it might be an easier way to make the component used to position the display 40 to rotate along the display 40. In such a case, when the display 40 locates on the proper position, the component used to position the display 40 would also locate a proper position. Based on such an idea, the rotatable displaying device 4 of the present application includes the display 40, the body 42 and the retaining device 5. The retaining device 5 includes a movable element 50 and a fixed element 51. The fixed element 51 is used to fix the movable element 50. A retaining element 52 on the display 40 is used to assemble to the movable element 50.

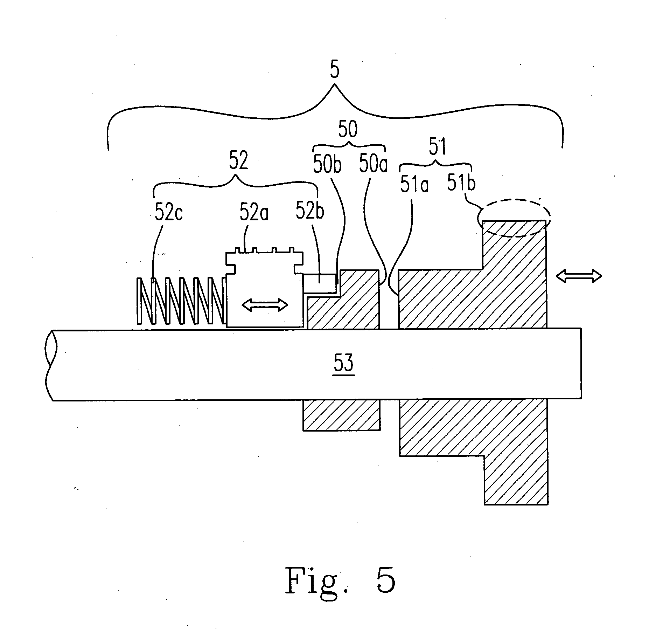

Please refer to Fig. 5, which shows the sectional drawing of the retaining device of the rotatable displaying device shown in Fig. 4(A). As shown in Fig. 5, the movable element 50 and the fixed element 51 are both mounted on a rotating shaft 53 and the retaining element 52 is assembled with the movable element 50. In which, the retaining element 52 includes a protrusion 52b and the movable element 50 has a slot 50b. (It is to be noted that it is also practical to make the retaining element 52 has a slot (not shown) and then the movable element 50 has a protrusion (not shown)). The protrusion 52b is detachably assembled to the slot 50b. When the protrusion 52b is assembled with the slot 50b, it could be realized that the retaining element 52 is assembled with the movable element 50. The movable element 50 has a first connecting surface 50a, and the fixed element 51 has a second connecting surface 51a for propping the first connecting surface 50a. In general, both the first and second connecting surfaces 50a and 51a are uneven. Accordingly, when the two connecting surfaces 50a and 51a are propping up to each other, the action of the movable element 50 could be controlled by the fixed element 51 due to the friction or the physical rigidity of the two connecting surfaces 50a and 51a.

Please refer to Figs. 4(A), 4(B) and 5. In the beginning, the fixed element 51 is separate from the movable element 50, i.e. the first connecting surface 50a is not connected to the second connecting surface 51a, but the retaining element 52 is assembled with the movable element 50. In this embodiment, the assembly between the retaining element 52 and the movable element 50 is carried out by the protrusion 52b and the slot 50b. At present, the movable element 50 is not fixed and could rotate with the display 40 via the assembly between the retaining element 52 and the movable element 50. Accordingly, it achieves that a device used to orientate the display is rotate with the display. When the display 40 rotates to have a specific viewing angle, the movable element 50 would also rotate the same specific angle.

Please refer to Fig. 4(C), after the movable element 50 rotates with the display 40, the fixed element 51 is pushed to the movable element 50 so as to hold the position of the movable element 50. In this embodiment, the first connecting surface 50a is then connected to the second connecting surface 51a. At present, since the movable element 50 is fixed to the specific viewing position the same as that of the display 40 by the fixed element 51 (via the first connecting surface 50a and the second connecting surface 51a), it could be viewed that the fixed position of the movable element 50 represents a proper viewing status of the display 40. Please refer to Fig. 4(D), after the movable element 50 is fixed on the specific position, the retaining element 52 is separated from the movable element 50, i.e. the protrusion 52b is separated from the slot 50b. Then, the display 40 could rotate independently from the movable element 50, for example, the display 40 could rotate back to its start position. As shown in Fig. 4(D), the display 40 has rotated back to its start position as shown in Fig. 4(A). In the next operation, the user could rotate the display 40 from its start position to the last specific position via the assembly of the protrusion 50b and the slot 50b. It is to be noted that an elastic element 52c supports a push for the protrusion 52b to combine with the slot 50b (please refer to Fig. 5). As above-mentioned, it is possible to orientate the display 40 form a start position to have the last specific viewing angle by the retaining device 5 of the present embodiment. Based on the mentioned disclosure, it is realized that a rotatable displaying device with the retaining device 5 of the present embodiment would not need the complicate mechanical and electrical retaining system in the prior art. Furthermore, the retaining device 5 of the embodiment could ascertain the last viewing angle, so that no fine adjusting is necessary when the protrusion 52b is assembled to the slot 50b.

Please refer to Figs 3 and 5, since the first pulling component 51 b exposed from the body 42, it is possible for the user to separate the first connecting surface 51 b from the second connecting surface 51a or to connect the first connecting surface 51 b to the second connecting surface 51a. In addition, since the second pulling component exposes from the display 40, it is possible for the user to separate the protrusion 52b from the slot 50b and then rotate the display 40 independently from the movable element 50. It is to be noted that, in addition to the uneven surfaces, the first and second connecting surface 50a and 51a might combine with each other via a clutch manner.

Based on the above-mentioned, the present application also provides a method for holding the operating angle of a rotatable displaying device. Please refer to Figs. 2 to 5, the provided method includes the following steps: step (1) providing a display 40 and a retaining element 52 on the display 40 (Figs. 4(A) - 5); and step (2) providing a retaining device 5; step (3) assembling the retaining element 52 with the retaining device 5 to make the retaining device 5 capable of rotating along the retaining element 52, taking Fig. 5 as an example, the movable element 50 of the retaining device 5 would rotate along the retaining element 52; step (4) rotating the display 40 to have a specific viewing angle; and step (5) fixing the position of the retaining device 5. At present, the operating angle of the display 40 is obtained and held. Based on the preceding descriptions about Figs. 4(A) - 5, it is realized that the fixed element 51 fix the position of the movable element 50.

Based on the above-mentioned, and please refer to Figs. 2-5, it could be realized that retaining device 5 (Fig. 5) is used to maintain the display 40 (Figs. 2 and 3) to work with a specific viewing angle. This specific viewing angle would not be changed incidentally. When the display 40 should be maintained at a specific working position, the display 40 should be mounted on the body 42, i.e. there in no relative motion between the display 40 and the body 42. Nevertheless, after the specific working position of the display 40 is obtained, it is sometimes necessary to remove the display 40 from the body 42 so as to rotate the display 40 back to its start position. Therefore, it might be the simplest way to detachably assemble the display 40 and body 42. In this embodiment, the retaining element 52 and the movable element 50 are used to detachably assemble to each other so that the display 40 could be detachably assembled to the retaining device 5. It is to be noted that the position of the movable element 50 could be also changed after the fixed element 51 is removed from the movable element 50. When the fixed element 51 is separated from the movable element and the moveable element 51 is assembled to the display 40 via the protrusion 52b and the slot 50b, the movable element 50 would be able to rotate with the display 40 again. The relevant operations could be realized in accordance with illustrations in Fig. 4(D) back to Fig. 4(A). Certainly, the movable element 50 could rotate with the display 40 to other positions, not only back to the start position of the display 40.

As above-mentioned, the present application makes the slot movable along the protrusion on the display, i.e. the movable element could rotate with the display when the user rotates the display to have a specific viewing angle. After the display arrives at the position having a specific viewing angle, the slot is fixed to a specific position (such as a position that the user could have a better viewing angle) accordingly. And then the display could be removed from the movable element and rotate its start position. During the next operation of the display, when the display rotates to have the specific viewing angle, the protrusion on the display would be assembled to the slot of the movable element via the push from the elastic element. Accordingly, it is easy to make to display to have the same viewing angle as its last operation. Such a structure design is also suitable for the display while the display is located its contained position, for example that shown in Fig. 2. Please refer to Fig. 2, where the display 40 is located at the contained position, the third pulling component 51 b' exposes from the body 42, and the fourth pulling component 52a' exposes from the display 40. In Fig. 5, the first pulling component 51b exposes from the body 42. As above-mentioned, the user could determines whether the first connecting surface 50a is connected to the second connecting surface 51a by the second pulling component 52a and the fourth pulling component 52a'. Furthermore, the present application is suitable to make the user easily find out his last operating position of the display, no matter the display is rotating back to the start position or rotating to the last specific position. Therefore, the present application could save lots of time and attention for fine adjusting the viewing angle of the display.

One of the creativeness and progressiveness of the present application is that the retaining element providing an orientation effect could rotate with the display and be fixed at a specific position. After the viewing angle of the display is confirmed, the retaining element could be fixed at the specific position. After the operation of the display in this round, the display could be removed from the retaining element and rotate to other position, where the retaining element is still fixed to the specific position. During the next operation of the display, since the retaining element is still fixed at the last position, the display could easily have the viewing angle same as its last operation by the protrusion 52b, the slot 50b and the push of the elastic element 52c.

As mentioned above, it is realized that the provided rotatoble displaying device does not need the electric power system in the prior art for adjusting the rotation of the display. Furthermore, since the orientation processing of the present application is carried out by a pure mechanical structure only, it is much easier to maintain and repair than that for the conventional complicate mechanical and electrical retaining system in the prior art. In addition, the retaining device of the present application makes the user easily find out his last operation position and saves lots of time and attention for the fine adjusting in the prior art. Since the rotatable displaying device and the relevant operating method for setting the viewing angle of the rotatable displaying device could avoid the complicate retaining system and the electric-consumption of the power system in the conventional displaying device, and save lots of time and cost in maintain and repair, this present application has novelty, progressiveness and industry utility.

## Claims

1. A rotatable displaying device (4), comprising:
a body(42);
a fixing element (51) assembled to the body (42);
a movable element (50) detachably assembled with the fixing element (51); and
a displaying component (40) pivotally mounted on the body (42) and detachably assembled with the movable element (50) via a retaining element (52).

2. A rotatable displaying device (4) as claimed in claim 1, **characterized in that** the movable element (50) and the retaining element (52) move together, and one of the movable element (50) and the retaining element (52) has a protrusion (52b) and the other one has a slot (50b).

3. A rotatable displaying device (4) as claimed in one of claims 1 - 2, **characterized by** comprising an elastic component (52c) mounted between the displaying component (40) and the retaining element (52).

4. A rotatable displaying device (4) as claimed in one of claims 1 - 3, **characterized in that** the movable element (50) has a first uneven surface (50a), and the fixing element (51) has a second uneven surface (51a) detachably connected to the first uneven surface (50a), and the movable element (50) and the displaying component (40) move together when the first uneven surface (50a) is separate from the second uneven surface (51a) and the retaining element (52) is connected with the movable element (50).

5. A method for obtaining an operating angle of a displaying device (4) having a displaying component (40), a retaining element (52) and a retaining device (5), comprising steps of:
(1) assembling the displaying component (40) with the retaining element (52);
(2) combining the retaining device (50) to the retaining element (52);
(3) rotating the displaying component (40) from a start position to a specific position; and
(4) fixing the retaining device (50).

6. A method as claimed in claim 5, **characterized in that** the retaining device (50) rotates with the displaying component (40) via the retaining element (52), and the method further includes a step of removing the retaining element (52) from the retaining device (50) after the step of (4).

7. A method as claimed in one of claims 5 - 6, **characterized in that** the operating angle is a rotating angle from the start position to the specific position.

8. A rotatable displaying device (4), comprising:
a body (42);
a retaining device (5) mounted on the body (42); and
a displaying component (40) pivotally mounted on the body (42) and detachably assembled with the retaining device (5) via a retaining element (52) and a pulling element (51).

9. A rotatable displaying device (4) as claimed in claim 8, **characterized in that** the retaining device (5) includes a movable element (50) detachably assembled to the retaining element (52).

10. A rotatable displaying device (4) as claimed in one of claims 8 - 9, **characterized in that** the movable element (50) and the retaining element (52) move together when they are assembled to each other.
